# EUROPÄISCHE PATENTANMELDUNG

(11) **EP 0 587 959 A1**
(43) Veröffentlichungstag der Anmeldung: **23.03.1994**
(21) Anmeldenummer: 92810708.5
(22) Anmeldetag: 14.09.1992
(51) Int. Cl.: G21C 9/016

(54) **Kernschmelzerückhaltevorrichtung für Leichtwasserreaktoren**

(71) Anmelder: ELEKTROWATT INGENIEURUNTERNEHMUNG AG, CH-8034 Zürich (CH)
(72) Erfinder: Ferroni, Ferruccio, CH-8047 Zürich (CH)
(74) Vertreter: Hammer, Bruno, Dr.

(57) **Zusammenfassung**

Die Vorrichtung (4) zum Rückhalten von Kernschmelze in Leichtwasserreaktoren mittels eines unterhalb des Reaktordruckbehälters (2) angeordneten Tiegels (40) besteht aus einer Wanne (41) und einer Vielzahl von sackartigen Ausstülpungen (42) an deren Unterseite sowie einem metallischen Deckel (43). Der Deckel bildet einen wasserdichten oberen Abschluss des Tiegels; er weist eine Verstärkung (43b) zum Absorbieren der kinetischen Energie der aufschlagenden Kernschmelze auf. Der Tiegel besteht aus einer metallischen Wand (40a), die mit einem keramischen Material (40b) - vorzugsweise aus heissisostatisch gepresstem Bornitrid - ausgekleidet ist. Die Vorrichtung (4) ist in einem wassergefüllten Kühlbecken (32) angeordnet, das den tiefstliegenden Teil des Containmentsumpfs bildet und das als eine Vertiefung des Containmentfundaments ausgebildet sein kann. Das im Anforderungsfall bei der Kühlung verdampfte Wasser kondensiert an den Wänden des Containments und fliesst wieder in den Containmentsumpf zurück.

## Beschreibung

Die Erfindung betrifft eine Vorrichtung zum Rückhalten von Kernschmelze - im Falle eines Kernschmelzunfalls bei Leichtwasserreaktoren - gemäss Oberbegriff von Anspruch 1 sowie eine Reaktoranlage mit einer solchen Vorrichtung. Wegen der Nachzerfallswärme des Reaktorkerns, die aufgrund der radioaktiven Spaltprodukte entsteht, schmilzt der Kern bei einer unfallbedingten Kühlwasser-Entleerung des Reaktordruckbehälters; die Kernschmelze durchdringt die Wand des Druckbehälters. Liegt keine Rückhaltevorrichtung zum Auffangen der Schmelze vor, so wird auch das Gebäudefundament von der Schmelze durchdrungen, wobei der Beton aufgrund der hohen Schmelzetemperatur (über 2500°C) unter Bildung von Wasserstoff, Kohlenmonoxid, Kohlendioxid und Wasserdampf zersetzt wird. Die Kernschmelze setzt sich im wesentlichen aus Uranoxid, Zirkonium sowie Stahl zusammen und zwar im Verhältnis von rund 6:1:3.

Zur Verhinderung der hypothetischen Folgen schwerer Unfälle in Leichtwasserreaktoren, insbesondere von Kernschmelzunfällen, sind verschiedene Sicherheitskonzepte entwickelt worden. So ist beispielsweise eine Kernschmelze-Rückhaltevorrichtung ("core catcher") vorgeschlagen worden, bei der unterhalb des Reaktorkerns ein schachtartiges Auffanggefäss für die Schmelze vorgesehen ist (R.Hammond, J.Dooley, 1982 "Retrofitting Core Catcher to Nuclear Plants", NUREG/CR-2941; oder US-PS 40 36 688). Diese bekannte Vorrichtung besteht aus einem oberen Abschnitt, der zylinderförmig ist (Durchmesser: 3,5-5 m, Höhe: 10-15 m), und einem unteren Abschnitt, der sich nach unten konisch verjüngt (Höhe: 20-25 m). Der obere Abschnitt ist mit hochfeuerfestem Material ausgekleidet und der untere ist als wassergekühlter, doppelwandiger Stahltiegel ausgebildet. Dieser Tiegel ist mit einem silikatischen oder oxidischen Keramik-Schüttgut gefüllt. Bei dem vorgesehenen Kühlsystem besteht die Gefahr, dass die innere Tiegelwand durch die Schmelze perforiert wird, wodurch radioaktive Spaltprodukte der Schmelze in die Umwelt freigesetzt werden können.

Aufgabe der Erfindung ist es, innerhalb des Containments einen Auffangraum für die Kernschmelze zu schaffen, der als Tiegel für ein sicheres und langfristiges Halten der Schmelze bei hohen Temperaturen ausgebildet ist. Diese Aufgabe wird mittels der kennzeichnenden Merkmale des Anspruchs 1 gelöst. Die im Tiegel der erfindungsgemässen Vorrichtung aufgefangene Kernschmelze wird im Kühlbecken durch Sumpfwasser gekühlt, das teilweise aus dem aufgebrochenen Primärwasserkreis stammt. Das bei der Kühlung verdampfte Wasser kondensiert an den Wänden des Containments und fliesst wieder in den Containmentsumpf zurück.

Die abhängigen Ansprüche 2 bis 8 betreffen vorteilhafte Ausführungsformen der erfindungsgemässen Vorrichtung. Die Tiegelauskleidung soll gegenüber der Kernschmelze möglichst inert sein. Beim Erstarren der Schmelze bildet sich in den Randzonen des Tiegels eine feste Schicht - ein "sekundärer Tiegel" - aus, die eine Schutzwirkung für die Wandung der Rückhaltevorrichtung entfaltet. Bis zur Ausbildung dieses sekundären Tiegels darf das Material der Auskleidung nur in beschränktem Masse mit der Schmelze reagieren. Es ist daher vorteilhaft, wenn eine nichtoxidische Keramik für die Tiegelauskleidung gewählt wird. Damit sich der schützende sekundäre Tiegel schnell ausbildet, muss die Wärme durch die Auskleidung gut abgeleitet werden. Heissisostatisch gepresstes Bornitrid - "HIP-BN" - erfüllt diese Anforderungen (Wärmeleitfähigkeit: 49 W/m·K bei 20°C; 28 W/m·K bei 800°C) und bietet verschiedene weitere Vorteile:

Dank des Bors wird eine Rekritikalität der Kernschmelze verhinderbar. Bornitrid (BN) weist bezüglich der Kernschmelze eine schlechte Benetzbarkeit auf. Der Schmelzpunkt von BN ist hoch; er liegt bei 3000°C. BN zeichnet sich durch eine gute Temperaturwechsel-Beständigkeit und eine gute Druckfestigkeit aus. BN ist in Luft bis zu einer Temperatur von 1000°C beständig.

Konstruktiv am einfachsten ist es, die Ausstülpungen der Tiegelwanne als kreiszylindrische Kühlrohre auszubilden. Für die äussere Tiegelwandung kann niedriglegierter Stahl verwendet werden. Am Wannenboden zwischen den Kühlrohren wird mit Vorteil eine dicke Schutzplatte vorgesehen, mit welcher die Auskleidung gegen den Aufprall der Kernschmelze geschützt werden kann. Diese Schutzplatte wird im Anforderungsfall (d.h. bei einem Kernschmelzunfall) durch die Kernschmelze geschmolzen. Der Tiegeldeckel, der einen wasserdichten Abschluss des Tiegels bildet, kann aus Stahlplatten zusammengesetzt werden, wobei beispielsweise horizontale Platten mit wabenförmig angeordneten vertikalen Platten, die in den Innenraum der Tiegelwanne ragen, verschweisst werden. Die wabenartige Deckelverstärkung kann auf der Schutzplatte des Wannenbodens aufgesetzt sein. Beim Rückhalten der Kernschmelze im Anforderungsfall wird zunächst die kinetische Energie der herabfallenden Kernschmelze in Deformationsenergie umgewandelt; darauf wird der Tiegeldeckel durchschmolzen. Das Volumen des Tiegels wird solcherart bemessen, dass der Tiegel durch die Schmelze beispielsweise bis rund 10 cm über den Wannenboden aufgefüllt wird.

Das Kühlbecken kann als tiefstliegender Teil des Containmentsumpfs vorgesehen werden; es kann als Vertiefung in der Fundamentplatte des Containments ausgebildet sein. Der Tiegeldeckel gewährleistet, dass kein Wasser in den Tiegel eindringt, auch wenn dieser durch zuströmendes Primärwasser überflutet wird. Das Kühlbecken ist immer mit Wasser gefüllt.

Es lassen sich zwei Versagensweisen des Reaktordruckbehälters unterscheiden, auf die man sich mit den Bezeichnungen "Niederdruck-" bzw. "Hochdruckpfad" bezieht. Beim Niederdruckpfad strömt die Kernschmelze durch eine aufgeschmolzene Perforation des Reaktorgefässes. Beim Hochdruckpfad wird die untere Kalotte des Reaktordruckbehälter mit der darin befindlichen Kernschmelze weggeschleudert. Um den Hochdruckpfad beherrschen zu können, muss eine Auffangstruktur zwischen Reaktordruckbehälter und Rückhaltevorrichtung vorgesehen werden, mit welcher die Rückhaltevorrichtung vor dem abgesprengten Wandstück des Druckgefässes abschirmbar ist. Diese Auffangstruktur wird mit Vorteil trichterartig ausgebildet, sodass die Schmelze in den Mittenbereich der Rückhaltevorrichtung lenkbar ist.

Der beim Kühlen der schmelzegefüllten Rückhaltevorrichtung entwickelte Dampf kann sich frei im Containment-Innenraum ausbreiten. Dank der Kondensation des Dampfes an den Wänden kann sich ein Gleichgewichtsdruck einspielen; dieser hängt von der Wärmeabfuhr des Containments an die Umgebung ab. Es ist möglich, dass der Druck auf eine unzulässige Höhe ansteigt. Um einem solchen Druckaufbau abhelfen zu können, muss das Containment mit einer gefilterten Druckentlastung (Vorrichtung zum gefilterten Druckentlasten) verbunden sein.

Nachfolgend wird die Erfindung anhand von Zeichnungen veranschaulicht. Es zeigen:
- Fig. 1: eine Ansicht einer Reaktoranlage,
- Fig. 2: ein Reaktordruckbehälter mit einer erfindungsgemässen Kernschmelze-Rückhaltevorrichtung,
- Fig. 3: eine perspektivische Abbildung eines Teils der Rückhaltevorrichung aus Fig.2 und
- Fig. 4: ein Diagramm mit einem Temperaturverlauf, der für ein Kühlrohr der in Fig.3 gezeigten Vorrichtung berechnet worden ist.

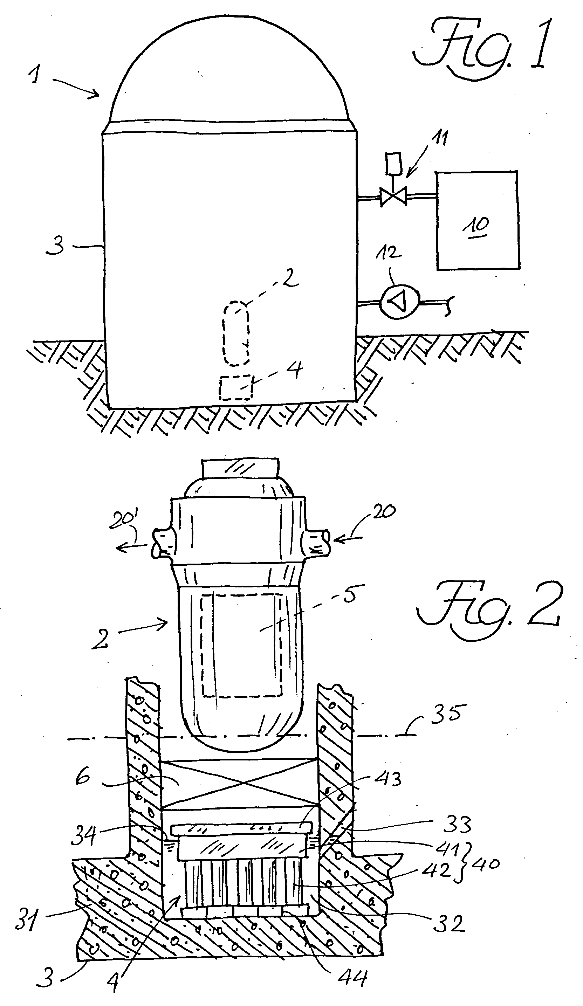

Die Reaktoranlage 1 in Fig.1 mit dem Reaktordruckbehälter 2 und dem Containment 3 enthält eine Kernschmelze-Rückhaltevorrichtung 4. Das Containment 3 ist mit einer Vorrichtung 10 zum gefilterten Druckentlasten verbunden, wobei die Verbindungsleitung ein steuerbares Absperrorgan 11 aufweist. Mit der Pumpe 12 kann im Bedarfsfall Wasser in das Containment nachgespiesen werden.

Das Reaktordruckbehälter 2 mit dem Reaktorkern 5 wird durch das Primärwasser 20 bzw. 20' gekühlt. In der Fundamentplatte 31 des Containments 3 befindet sich das als Vertiefung ausgebildete Kühlbecken 32 der erfindungsgemässen Rückhaltevorrichtung 4. Das Kühlbecken 32 bildet den tiefstliegenden Teil des Containmentsumpfs; es ist mit dem übrigen Teil des Sumpfs durch Kanäle 33 verbunden. Die Vorrichtung 4 setzt sich aus einem Tiegel 40, der aus einer Wanne 41 und einer Vielzahl von rohrförmigen Ausstülpungen 42 besteht, und einem Deckel 43 zusammen. Die Kühlrohre 42 sind durch eine Verbindungsstruktur 44, die beispielsweise aus Laschen besteht, mit dem Betonfundament 31 verbunden. Die Verbindungsstruktur 44 ermöglicht einerseits die Kühlung der Kühlrohre 42 an deren Unterseite; andererseits hat sie die Aufgabe, eine Dehnung der Rückhaltevorrichtung 4 möglichts unbehindert zu lassen, um so thermische Spannungen klein zu halten. Zwischen Reaktordruckbehälter 2 und Rückhaltevorrichtung 4 ist eine Auffangstruktur 6 angedeutet, deren Funktion bereits oben erläutert worden ist. Das Niveau 34 gibt den Wasserspiegel des Kühlbeckens 32 im Bereitschaftszustand an; die strichpunktiert gezeichnete Linie 35 bedeutet das Wasserniveau im Anforderungsfall.

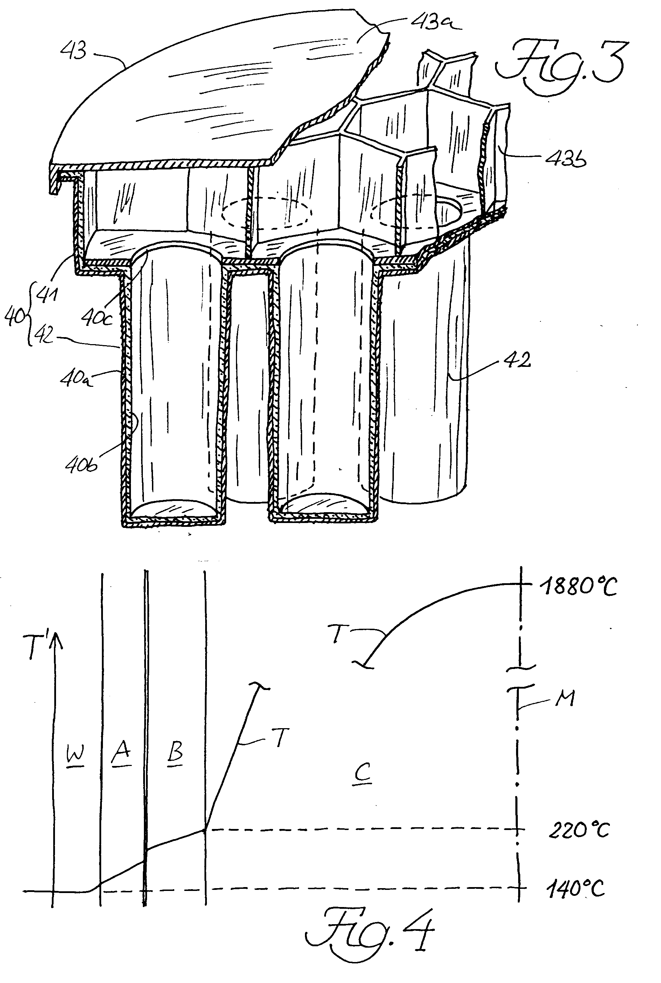

Der in Fig.3 dargestellte Ausschnitt aus einer erfindungsgemässen Rückhaltevorrichtung 4 zeigt vier Kühlrohre 42, wobei zwei dieser Rohre 42 längsgeschnitten sind. Die Wände der Wanne 41 und der Rohre 42, die den Tiegel 40 bilden, werden durch eine Stahlwand 40a und eine keramische Auskleidung 40b beispielsweise aus HIP-NB gebildet. Der Wannenboden ist von einer Schutzplatte 40c abgedeckt. Der Tiegeldeckel 43 besteht aus einer Deckplatte 43a und einer wabenförmigen Verstärkungsstruktur 43b. Der Deckel 43 ist mit dem Tiegel 40 dicht verbunden.

Die Kurve T im Diagramm der Fig.4 zeigt den radialen Verlauf der berechneten Temperatur T' in einem Kühlrohr 42. Die strichpunktiert gezeichnete Linie M entspricht der Achse des Kühlrohrs. Die Zonen W, A, B und C entsprechen dem Kühlwasser des Kühlbeckens 32, der Stahlwand 40a, der keramischen Auskleidung 40b (aus HIP-BN) bzw. dem Innenraum des Kühlrohrs 42. Der Berechnung der Kurve T liegen folgende Parameter zugrunde: Nachzerfalls-Wärmeproduktion = 1 MW/m³, Innendurchmesser des Kühlrohrs = 30 cm, Wanddicke des Stahlrohrs = 8 mm, Wanddicke des Bornitridrohrs = 10 mm; zwischen den beiden Rohren ist ein Spalt mit einem Spaltwiderstand von 0,55 W/cm²·K angenommen worden. Die drei in Fig.4 angegebenen Temperaturen sind gerundete Werte; der Verlauf der Kurve T ist nur grob wiedergegeben worden.

Für einen Reaktor mit einer thermischen Leistung von 3000 MW (Nachzerfallswärme rund 20 MW, drei Stunden nach Aussetzen der Kernspaltung) ist eine erfindungsgemässe Kernschmelze-Rückhaltevorrichtung vorzusehen, die eine Höhe von rund 2,5 m und einen Durchmesser von rund 7 m aufweist. Die Anzahl der Kühlrohre mit einem Innendurchmesser von 30 cm und einer Länge von 1,8 m beträgt bei dieser Vorrichtung rund 170.

## Patentansprüche

1. Vorrichtung (4) zum Rückhalten von Kernschmelze in Leichtwasserreaktoren mittels eines unterhalb des Reaktordruckbehälters (2) angeordneten Tiegels (40), dadurch gekennzeichnet, dass der Tiegel als Wanne (41) mit einer Vielzahl von sackartigen Ausstülpungen (42) an deren Unterseite ausgebildet ist, dass ein metallischer Deckel (43) einen wasserdichten oberen Abschluss des Tiegels bildet, dass der Deckel eine Verstärkung (43b) zum Absorbieren der kinetischen Energie der aufschlagenden Kernschmelze aufweist, dass der Tiegel aus einer metallischen Wand (40a) besteht, die mit einem keramischen Material (40b) ausgekleidet ist, und dass die Vorrichtung (4) in einem wassergefüllten Kühlbecken (32) angeordnet ist.

2. Vorrichtung nach Anspruch 1, dadurch gekennzeichnet, dass die Tiegelauskleidung (40b) aus einer nichtoxidischen Keramik besteht, die eine Wärmeleitfähigkeit grösser als 10 W/m·K, bei 800°C, aufweist und dass die Wandstärke der Auskleidung mindestens 5 mm beträgt.

3. Vorrichtung nach Anspruch 2, dadurch gekennzeichnet, dass die keramische Auskleidung (40b) aus heissisostatisch gepresstem Bornitrid besteht.

4. Vorrichtung nach einem der Ansprüche 1 bis 3, dadurch gekennzeichnet, dass die metallische Aussenwand (40a) des Tiegels (40) aus niedriglegiertem Stahl besteht.

5. Vorrichtung nach einem der Ansprüche 1 bis 4, dadurch gekennzeichnet, dass der Boden der Wanne (41) zwischen den Ausstülpungen (42) mit einer Schutzplatte (40c) aus Stahl abgedeckt ist.

6. Vorrichtung nach einem der Ansprüche 1 bis 5, dadurch gekennzeichnet, dass die Ausstülpungen (42) eine kreiszylindrische Form aufweisen.

7. Vorrichtung nach einem der Ansprüche 1 bis 6, dadurch gekennzeichnet, dass der Deckel (43) des Tiegels (40) aus Stahlplatten zusammengesetzt ist, wobei horizontale Platten (43a) mit wabenförmig angeordneten vertikalen Platten (43b), die in den Innenraum der Tiegelwanne (41) ragen, verschweisst sind.

8. Vorrichtung nach einem der Ansprüche 1 bis 7, dadurch gekennzeichnet, dass der Tiegel (40) durch die Schmelze bis mindestens 10 cm über den Wannenboden (40c) auffüllbar ist.

9. Kernreaktoranlage (1) mit einem Reaktordruckbehälter (2), mit einem Containment (3), mit einer Kernschmelze-Rückhaltevorrichtung (4) gemäss einem der Ansprüche 1 bis 8 und mit einer Auffangstruktur (6) zwischen Druckbehälter (2) und Rückhaltevorrichtung (4), mit welcher die Rückhaltevorrichtung vor einem abgesprengten Wandstück des Druckbehälters abschirmbar ist und welche trichterartig ausgebildet ist, sodass die Schmelze in den Mittenbereich der Rückhaltevorrichtung lenkbar ist.

10. Anlage nach Anspruch 9, dadurch gekennzeichnet, dass das Kühlbecken (32) der Rückhaltevorrichtung (4) aus einer Vertiefung im Containmentfundament (31) gebildet wird.

11. Anlage nach Anspruch 9 oder 10, dadurch gekennzeichnet, dass das Containment (3) mit einer Vorrichtung (10) zum gefilterten Druckentlasten verbunden ist.
